(19) **Europäisches Patentamt / European Patent Office / Office européen des brevets**

(11) **EP 3 308 171 B1**

(12) **FASCICULE DE BREVET EUROPEEN**

(45) Date de publication et mention de la délivrance du brevet:
**18.12.2019 Bulletin 2019/51**

(21) Numéro de dépôt: **16733147.9**

(22) Date de dépôt: **25.05.2016**

(51) Int Cl.:
*G01P 3/489* *(2006.01)*

(86) Numéro de dépôt international:
**PCT/FR2016/051223**

(87) Numéro de publication internationale:
**WO 2016/198761 (15.12.2016 Gazette 2016/50)**

(54) **PROCÉDÉ DE CALCUL D'UNE VITESSE DE ROUE ET DISPOSITIF DE MESURE CORRESPONDANT**

VERFAHREN ZUR BERECHNUNG DER RADGESCHWINDIGKEIT UND ENTSPRECHENDE MESSVORRICHTUNG

WHEEL SPEED CALCULATION METHOD AND CORRESPONDING MEASUREMENT DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.06.2015 FR 1555351**

(43) Date de publication de la demande:
**18.04.2018 Bulletin 2018/16**

(73) Titulaire: **Renault S.A.S.**
**92100 Boulogne-Billancourt (FR)**

(72) Inventeur: **SOYSOUVANH, Henri**
**92100 Boulogne-Billancourt (FR)**

(56) Documents cités:
**US-A- 4 566 069**    **US-A- 4 581 713**
**US-A- 5 388 053**    **US-A1- 2012 323 523**

**Description**

La présente invention se rapporte de manière générale au domaine de l'automobile, et concerne plus précisément le calcul de la vitesse des roues d'un véhicule à basse vitesse.

Les systèmes de surveillance de la pression des pneumatiques devenus obligatoires dans les véhicules, utilisent soit directement des capteurs de pression localisés dans les pneumatiques, soit des méthodes indirectes de détermination d'un sous-gonflage ou d'une crevaison, ces méthodes indirectes utilisant notamment des mesures des vitesses des roues du véhicule.

Une telle mesure est effectuée par un dispositif de mesure de vitesse de roue utilisant généralement un capteur magnétique comportant un anneau denté entraîné en rotation à la même vitesse que la roue, et une partie fixe de détection reliée à un calculateur. On connaît une implémentation commercialisée d'un dispositif de mesure de vitesse de roue, dans laquelle l'anneau denté comporte 96 dents, le passage de cet anneau denté devant le détecteur magnétique déclenchant une pulsation électrique. Une mémoire tampon enregistre les valeurs d'une horloge correspondant à la réception de chaque pulsation électrique. L'horloge fonctionnant à une fréquence de 4MHz (méga Hertz) incrémente une valeur codée sur 16 bits. La mémoire tampon est vidée toutes les 100 ms (millisecondes).

Actuellement ces dispositifs de mesure ne fonctionnent pas lorsque le nombre de pulsations électriques reçues sur la période de la mémoire tampon est inférieur ou égal au nombre de fois que l'horloge s'incrémente depuis la valeur zéro sur cette période. Ceci est dû au fait que les valeurs d'horloge enregistrées ne sont alors plus positionnables sur la période de la mémoire tampon car ses incrémentations successives ne sont plus lisibles par correspondance avec les pulsations électriques reçues. Ainsi avec le dispositif de mesure précité, l'horloge revenant sept fois à zéro sur la période de 100 millisecondes de mise à jour de la mémoire tampon, aucune mesure de vitesse n'est disponible lorsque le nombre de pulsations électriques reçues en 100 millisecondes est inférieur ou égal à sept. Or même à très basse vitesse, c'est-à-dire en dessous de 2 m/s (mètre par seconde), une mesure fiable de vitesse de roue permettrait au système de surveillance de pression des pneumatiques de pouvoir détecter une crevaison ou un sous-gonflage des pneumatiques, ce qui permettrait d'alerter plus vite le conducteur d'un problème de pression sur ses pneumatiques.

Un des buts de l'invention est de remédier à au moins une partie des inconvénients de la technique antérieure en fournissant un procédé de calcul d'une vitesse de roue d'un véhicule, et un dispositif de mesure d'une telle vitesse, permettant d'obtenir une valeur fiable de vitesse de roue à très basse vitesse.

A cette fin, l'invention propose un procédé de calcul d'une vitesse de roue d'un véhicule comportant les étapes de :

- enregistrement pendant une période prédéfinie, dans une mémoire tampon, de valeurs prises par une horloge codée sur un nombre Nb de bits, lors de la réception d'au moins deux pulsations électriques consécutives k-1 et k,
- calcul d'une vitesse de roue,

caractérisé en ce que lorsque le nombre de pulsations électriques reçues pendant ladite période prédéfinie est inférieur au nombre de passages à la valeur zéro de l'horloge pendant ladite période prédéfinie, ladite étape de calcul d'une vitesse de roue utilise la formule :

$$V(n) = \frac{2\pi R}{N\Delta t(n)}$$

où

V(n) est la vitesse de roue calculée à ladite étape de calcul,
R est une valeur pré-enregistrée de rayon de roue,
N est le nombre de dents du capteur de vitesse de roue utilisé dans ledit procédé,

$$\Delta t(n) = [top_k - top_{k-1} + (2^{Nb} - 1)n] * T_H ,$$

où $top_k$ est la valeur d'horloge enregistrée lors de la réception de la kième pulsation électrique, et $T_H$ est la valeur de la période de ladite horloge,

la valeur de n étant déterminée telle que $\frac{2\pi R i}{N T_H} < V(n) < \frac{2\pi R(i+1)}{N T_H}$, i étant le nombre de pulsations électriques reçues pendant ladite période prédéfinie.

Grâce à l'invention, il est possible pour le système de surveillance de pression des pneumatiques d'obtenir une mesure de vitesse lorsque pendant la période d'enregistrement des pulsations électriques, le nombre de pulsations électriques reçues du capteur magnétique est plus petit que le nombre de fois que l'horloge s'incrémente de zéro. Ainsi le conducteur pourra être alerté rapidement d'un sous-gonflage ou d'une crevaison de ses pneumatiques.

Selon une implémentation avantageuse de l'invention, la valeur du nombre Nb de bits est égale à 16, la valeur de la période de ladite horloge TH est égale à 0,25$\mu$s et la valeur N du nombre de dents est égale à 96, la valeur de n étant définie comme suit :

- lorsque 7 pulsations électriques sont reçues pendant ladite période prédéfinie, n=1
- lorsque le nombre i de pulsations électriques reçues pendant ladite période prédéfinie vaut 4, 5 ou 6, alors n=1 si

$$\frac{2\pi Ri}{NT_H} < V(1) < \frac{2\pi R(i+1)}{NT_H} \text{ , sinon n=2,}$$

- lorsque le nombre i de pulsations électriques reçues pendant ladite période prédéfinie vaut 2 ou 3,

alors n=2 si $\frac{2\pi Ri}{NT_H} < V(2) < \frac{2\pi R(i+1)}{NT_H}$ , sinon n=3.

Cette implémentation de l'invention est peu coûteuse car elle réutilise un dispositif de mesure de vitesse existant en ne modifiant que son logiciel de calcul.

Selon une caractéristique avantageuse de l'invention, la vitesse de roue V(n) est calculée pour chaque intervalle de temps compris entre chaque pulsation électrique reçue.

Cette caractéristique permet au système de surveillance de pression des pneumatiques d'avoir accès à une vitesse de roue plus précise dans le temps que dans l'art antérieur, et donc de fournir des informations plus fiables sur l'état des pneumatiques.

Selon une autre caractéristique avantageuse, le procédé selon l'invention comporte une étape supplémentaire de calcul itératif de l'instant de réception $t_k$ d'une kième pulsation électrique selon la formule :

$$t_k = t_{k-1} + \Delta t(n)$$

Ces instants de réception des pulsations électriques reçues permettent au système de surveillance de pression des pneumatiques de traiter un signal vitesse de roue en fonction du temps très précis pour la détection des crevaisons et des sous-gonflages, ce qui améliore sa fiabilité.

L'invention concerne aussi un dispositif de mesure d'une vitesse de roue d'un véhicule comportant des moyens pour mettre en œuvre le procédé de calcul selon l'invention. Ce dispositif comporte notamment une mémoire tampon apte à enregistrer pendant une période prédéfinie, des valeurs prises par une horloge codée sur un nombre Nb de bits, lors de la réception d'au moins deux pulsations électriques consécutives k-1 et k émises par un détecteur magnétique au passage de dents d'une roue dentée de capteur magnétique, ledit dispositif comportant en outre des moyens de calcul d'une vitesse de roue, ledit dispositif étant caractérisé en ce que lorsque le nombre de pulsations électriques reçues pendant ladite période prédéfinie est inférieur au nombre de passages à la valeur zéro de l'horloge pendant ladite période prédéfinie, lesdits moyens de calcul d'une vitesse de roue sont aptes à calculer ladite vitesse de roue selon la formule :

$$V(n) = \frac{2\pi R}{N\Delta t(n)}$$

où

V(n) est la vitesse de roue calculée par lesdits moyens de calcul,
R est une valeur pré-enregistrée de rayon de roue,
N est le nombre de dents de ladite roue dentée,

$$\Delta t(n) = [top_k - top_{k-1} + (2^{Nb} - 1)n] * T_H,$$

où $top_k$ est la valeur d'horloge enregistrée lors de la réception de la kième pulsation électrique, et $T_H$ est la valeur de la période de ladite horloge,

la valeur de n étant déterminée telle que $\frac{2\pi Ri}{NT_H} < V(n) < \frac{2\pi R(i+1)}{NT_H}$, i étant le nombre de pulsations électriques reçues pendant ladite période prédéfinie.

Ce dispositif de mesure selon l'invention présente des avantages analogues à ceux du procédé de calcul selon l'invention.

D'autres caractéristiques et avantages apparaîtront à la lecture d'un mode de réalisation préféré décrit en référence aux figures dans lesquelles :

- la figure 1 représente un dispositif de mesure de vitesse de roue selon l'invention, dans ce mode préféré de réalisation,
- la figure 2 représente des étapes du procédé de calcul de vitesse de roue selon l'invention, dans ce mode préféré de réalisation,
- la figure 3 représente un tableau donnant un exemple de valeurs horloge correspondant à la réception de pulsations électriques enregistrées dans une mémoire tampon d'un dispositif de mesure de vitesse de roue,
- et la figure 4 représente ces valeurs d'horloge sur un diagramme temporel, chaque pulsation électrique étant représentée temporellement dans l'incrémentation d'horloge correspondante.

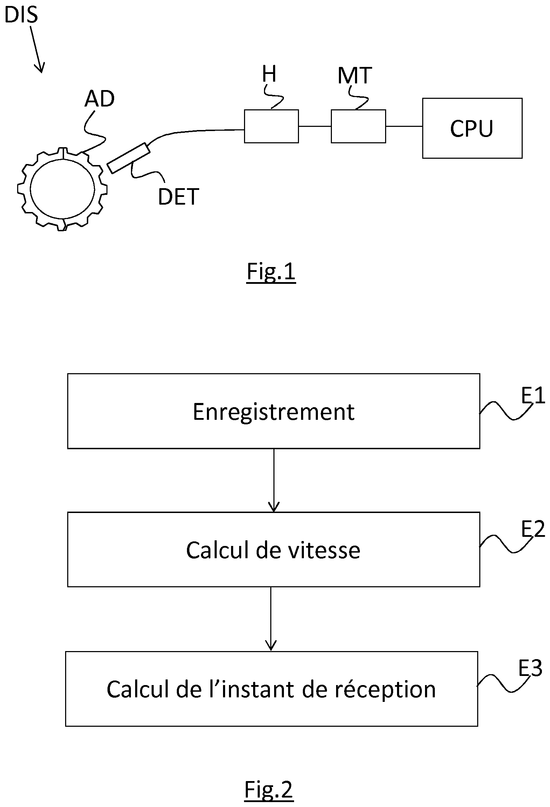

Selon un mode préféré de réalisation de l'invention représenté à la **figure 1,** un dispositif DIS de mesure de vitesse de roue d'un véhicule selon l'invention comporte :

- un capteur magnétique, celui-ci comportant une roue dentée AD de 96 dents entraînée en rotation avec la roue du véhicule, et un détecteur magnétique DET fixe par rapport au châssis du véhicule,
- une horloge H incrémentant une valeur codée sur 16 bits à une fréquence de 4MHz,
- une mémoire tampon MT,
- et une unité centrale CPU exécutant un logiciel dont les instructions permettent d'exécuter les étapes d'un procédé de calcul de vitesse de roue selon l'invention.

Lorsque le véhicule roule, le détecteur magnétique DET détecte devant lui le passage d'une dent de la roue dentée AD. A chaque passage détecté, le détecteur magnétique DET envoie une pulsation électrique à l'horloge H. Celle-ci envoie alors sa valeur courante, comprise entre 0 et 65535, à la mémoire tampon MT. La mémoire tampon MT enregistre les valeurs d'horloge reçues correspondant chacune à la réception d'une pulsation électrique, et se vide toutes les 100ms.

En référence à la **figure 2,** le procédé de calcul de vitesse de roue selon l'invention, mis en œuvre dans le dispositif de mesure DIS, est représenté sous la forme d'un algorithme comportant des étapes E1 à E3.

L'étape E1 est l'enregistrement pendant la période prédéfinie $T_E$ de 100ms, dans la mémoire tampon MT, des valeurs prises par l'horloge H lors de la réception de pulsations électriques envoyées par le capteur magnétique.

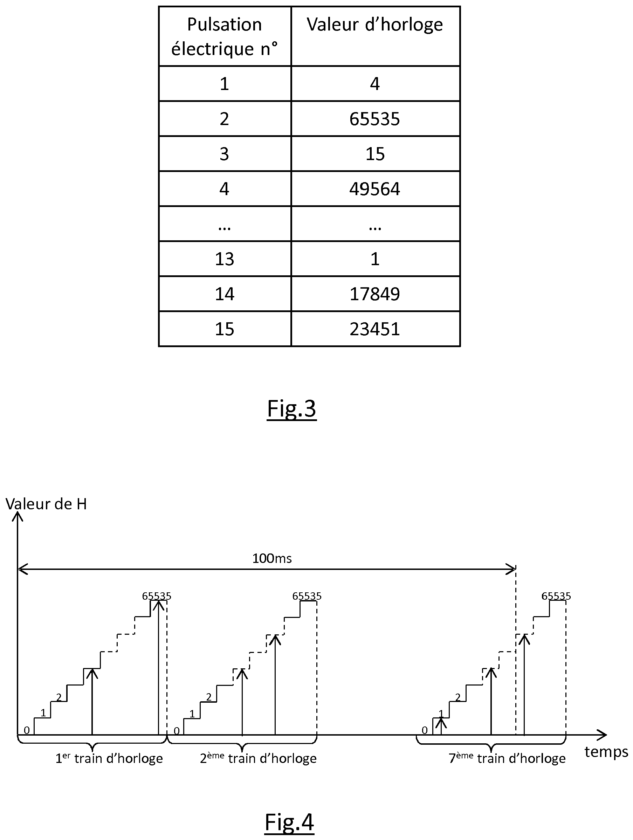

Ces valeurs d'horloge sont enregistrées par exemple sous la forme d'un tableau tel que représenté à la **figure 3.** Ce tableau contient quinze entrées correspondant à quinze pulsations électriques reçues lors d'une période d'enregistrement $T_E$ de 100ms dans la mémoire tampon MT. Dans cet enregistrement, lors de la réception de la première pulsation électrique l'horloge H avait la valeur 4, lors de la réception de la deuxième pulsation électrique l'horloge H avait la valeur 65535, et lors de la réception de la troisième pulsation électrique l'horloge H avait la valeur 15. On voit donc que lorsque suffisamment de pulsations électriques sont reçues, la croissance ou la décroissance de valeurs d'horloge consécutives permettent de situer les pulsations électriques temporellement sur un « train d'horloge » correspondant c'est-à-dire une incrémentation depuis zéro de l'horloge H.

La **figure 4** représente les pulsations électriques reçues du tableau de la **figure 3,** sur un diagramme temporel montrant les sept trains d'horloge qui s'écoulent pendant la période d'enregistrement $T_E$ de 100ms, le septième train d'horloge n'étant pas écoulé à l'issue de cette période. On voit sur ce diagramme que lorsque deux valeurs d'horloge correspondant à deux pulsations électriques se suivent dans l'ordre croissant, ces deux pulsations électriques sont situées dans le même train d'horloge.

L'étape suivante E2 est le calcul d'une vitesse de roue. De façon connue, lorsque le nombre de pulsations électriques reçues pendant une période d'enregistrement $T_E$ de 100ms est supérieur ou égal à huit, il suffit d'identifier deux valeurs d'horloge successives croissantes $top_{k-1}$ et $top_k$ pour calculer une vitesse de roue V pour cette période, selon la formule suivante :

$$V = \frac{2\pi R}{96\Delta t}$$

Où :

- R est une valeur pré-enregistrée de rayon de la roue du véhicule,
- $\Delta t = (top_k - top_{k-1}) * T_H$ où $T_H$ est la période de l'horloge H.

Selon l'invention, dans cette étape E2, lorsque le nombre de pulsations électriques reçues pendant la période d'enregistrement $T_E$ de 100ms est supérieur ou égal à huit, le calcul de la vitesse de roue est de préférence effectué pour chaque intervalle de temps compris entre deux pulsations reçues pendant la période d'enregistrement $T_E$ de 100ms, en utilisant la formule :

$$V = \frac{2\pi R}{96\Delta t}$$

avec :

- $\Delta t = (top_k - top_{k-1}) * T_H$ lorsque les deux valeurs d'horloge $top_{k-1}$ et $top_k$ consécutives correspondant aux deux pulsations reçues sont telles que :

$$top_k - top_{k-1} > 0$$

- ou $\Delta t = (top_k - top_{k-1} + 65535) * T_H$ lorsque les deux valeurs d'horloge $top_{k-1}$ et $top_k$ consécutives correspondant aux deux pulsations reçues sont telles que :

$$top_k - top_{k-1} \leq 0$$

En effet l'inventeur a constaté que lorsque deux valeurs consécutives d'horloge enregistrées sont décroissantes alors qu'il y a eu au moins huit pulsations électriques reçues, c'est que les pulsations électriques correspondantes sont sur deux trains d'horloge consécutifs.

De plus selon l'invention, lorsque le nombre de pulsations électriques reçues pendant la période d'enregistrement $T_E$ de 100ms est inférieur au nombre de retours à la valeur zéro de l'horloge, c'est-à-dire 7 dans ce mode de réalisation de l'invention, l'étape E2 de calcul d'une vitesse de roue utilise la formule :

$$V(n) = \frac{2\pi R}{N\Delta t(n)}$$

avec :

V(n) : vitesse de roue correspondant à l'intervalle de temps $\Delta t(n)$
R : valeur pré-enregistrée de rayon de roue
N =96: nombre de dents du capteur de vitesse de roue utilisé

$$\Delta t(n) = [top_k - top_{k-1} + (2^{Nb} - 1)n] * T_H,$$

où $top_k$ est la valeur d'horloge enregistrée lors de la réception de la kième pulsation électrique, $T_H$ est la valeur de la période de l'horloge H c'est-à-dire $0{,}25\mu s$ (microsecondes), et Nb le nombre de bits codant la valeur de l'horloge H donc 16 dans ce mode de réalisation de l'invention,

la valeur de n étant déterminée telle que $\frac{2\pi Ri}{NT_H} < V(n) < \frac{2\pi R(i+1)}{NT_H}$, i étant le nombre de pulsations électriques reçues pendant la période d'enregistrement $T_E$ de 100ms. La valeur n correspond au nombre de trains d'horloges « séparant » les deux pulsations reçues correspondant aux valeurs d'horloge $top_k$ et $top_{k-1}$ (lorsque n=1, les deux pulsations reçues sont sur deux trains d'horloge consécutifs).

Ainsi, dans cette étape E2 :

- lorsque 7 pulsations électriques sont reçues pendant ladite période prédéfinie $T_E$, n=1
- lorsque le nombre i de pulsations électriques reçues pendant ladite période prédéfinie $T_E$ vaut 4, 5 ou 6, alors n=1

si $\frac{2\pi Ri}{NT_H} < V(1) < \frac{2\pi R(i+1)}{NT_H}$, sinon n=2,

- lorsque le nombre i de pulsations électriques reçues pendant ladite période prédéfinie $T_E$ vaut 2 ou 3,

alors n=2 si $\frac{2\pi Ri}{NT_H} < V(2) < \frac{2\pi R(i+1)}{NT_H}$, sinon n=3.

Cette formule selon l'invention utilise astucieusement une première estimation formée par l'intervalle $\left[\frac{2\pi Ri}{NT_H}; \frac{2\pi R(i+1)}{NT_H}\right]$ de la vitesse de roue à calculer pour déterminer le nombre de trains d'horloge séparant deux pulsations électriques reçues.

L'étape suivante E3 est le calcul des instants de réception des pulsations électriques pendant la période d'enregistrement $T_E$ de 100ms. Ce calcul s'effectue itérativement en utilisant la formule :

$$t_k = t_{k-1} + \Delta t(n)$$

Où $t_k$ et $t_{k-1}$ sont les instants de réception des pulsations électriques correspondant aux valeurs d'horloge $top_k$ et $top_{k-1}$.

A noter que pour déterminer $t_0$, il faut impérativement que le véhicule ait roulé à une vitesse supérieure à 2 m/s afin de pouvoir caler l'origine des temps. L'algorithme permet d'obtenir les durées entre les différents tops, dès que le véhicule a dépassé une fois ce seuil de vitesse.

Il est à noter que ce mode de réalisation préféré de l'invention est généralisable à d'autres valeurs du nombre Nb de bits codant l'horloge H, de période d'horloge H, ou du nombre N de dents du capteur magnétique. De plus dans ce mode de réalisation, les étapes E2 et E3 se suivent mais en variantes ces étapes sont effectuées parallèlement, ou dans encore une autre variante, seule l'étape E2 est effectuée.

## Revendications

1. Procédé de calcul d'une vitesse de roue d'un véhicule comportant les étapes de :

   - enregistrement (E1) pendant une période prédéfinie ($T_E$), dans une mémoire tampon (MT), de valeurs prises par une horloge (H) codée sur un nombre Nb de bits, lors de la réception d'au moins deux pulsations électriques consécutives k-1 et k,
   - calcul (E2) d'une vitesse de roue,
   **caractérisé en ce que** lorsque le nombre de pulsations électriques reçues pendant ladite période prédéfinie ($T_E$) est inférieur au nombre de passages à la valeur zéro de l'horloge (H) pendant ladite période prédéfinie ($T_E$), ladite étape (E2) de calcul d'une vitesse de roue utilise la formule :

$$V(n) = \frac{2\pi R}{N\Delta t(n)}$$

   où

   V(n) est la vitesse de roue calculée à ladite étape de calcul,
   R est une valeur pré-enregistrée de rayon de roue,

N est le nombre de dents du capteur de vitesse de roue utilisé dans ledit procédé,

$$\Delta t(n) = [top_k - top_{k-1} + (2^{Nb} - 1)n] * T_H \ ,$$

où $top_k$ est la valeur d'horloge enregistrée lors de la réception de la kième pulsation électrique, et $T_H$ est la valeur de la période de ladite horloge,

la valeur de n étant déterminée telle que $\frac{2\pi Ri}{NT_H} < V(n) < \frac{2\pi R(i+1)}{NT_H}$, i étant le nombre de pulsations électriques reçues pendant ladite période prédéfinie ($T_E$).

2. Procédé de calcul d'une vitesse de roue selon la revendication 1, dans lequel la valeur du nombre Nb de bits étant égale à 16, la valeur de la période de ladite horloge $T_H$ étant égale à 0,25μs, la valeur de ladite période prédéfinie ($T_E$) étant égale à 100ms et la valeur N du nombre de dents étant égale à 96, la valeur de n est définie comme suit :

   - lorsque 7 pulsations électriques sont reçues pendant ladite période prédéfinie ($T_E$), n=1
   - lorsque le nombre i de pulsations électriques reçues pendant ladite période prédéfinie ($T_E$) vaut 4, 5 ou 6, alors n=1 si $\frac{2\pi Ri}{NT_H} < V(1) < \frac{2\pi R(i+1)}{NT_H}$ , sinon n=2,

   - lorsque le nombre i de pulsations électriques reçues pendant ladite période prédéfinie ($T_E$) vaut 2 ou 3,

   alors n=2 si $\frac{2\pi Ri}{NT_H} < V(2) < \frac{2\pi R(i+1)}{NT_H}$ , sinon n=3.

3. Procédé de calcul d'une vitesse de roue selon la revendication 1 ou 2, **caractérisé en ce que** la vitesse de roue V(n) est calculée pour chaque intervalle de temps compris entre chaque pulsation électrique reçue.

4. Procédé de calcul d'une vitesse de roue selon l'une quelconque des revendications précédentes, **caractérisé en ce qu'**il comporte une étape (E3) supplémentaire de calcul itératif de l'instant de réception $t_k$ d'une kième pulsation électrique par la formule :

$$t_k = t_{k-1} + \Delta t(n)$$

5. Dispositif (DIS) de mesure d'une vitesse de roue d'un véhicule comportant une mémoire tampon apte à enregistrer pendant une période prédéfinie ($T_E$), des valeurs prises par une horloge (H) codée sur un nombre Nb de bits, lors de la réception d'au moins deux pulsations électriques consécutives k-1 et k émises par un détecteur magnétique (DET) au passage de dents d'une roue dentée de capteur magnétique, ledit dispositif comportant en outre des moyens de calcul d'une vitesse de roue, ledit dispositif étant **caractérisé en ce que** lorsque le nombre de pulsations électriques reçues pendant ladite période prédéfinie ($T_E$) est inférieur au nombre de passages à la valeur zéro de l'horloge (H) pendant ladite période prédéfinie ($T_E$), lesdits moyens de calcul d'une vitesse de roue sont aptes à calculer ladite vitesse de roue selon la formule :

$$V(n) = \frac{2\pi R}{N\Delta t(n)}$$

où

V(n) est la vitesse de roue calculée par lesdits moyens de calcul,
R est une valeur pré-enregistrée de rayon de roue,
N est le nombre de dents de ladite roue dentée,

$$\Delta t(n) = [top_k - top_{k-1} + (2^{Nb} - 1)n] * T_H \ ,$$

où $top_k$ est la valeur d'horloge enregistrée lors de la réception de la kième pulsation électrique, et $T_H$ est la valeur de la période de ladite horloge,

la valeur de n étant déterminée telle que $\frac{2\pi Ri}{NT_H} < V(n) < \frac{2\pi R(i+1)}{NT_H}$, i étant le nombre de pulsations électriques reçues pendant ladite période prédéfinie ($T_E$).

**Patentansprüche**

1. Verfahren zur Berechnung einer Radgeschwindigkeit eines Fahrzeugs, die folgenden Schritte umfassend:

- Speicherung (E1), während einer vordefinierten Periode ($T_E$) in einem Pufferspeicher (MT), von Werten, die von einem auf einer Anzahl Nb von Bits codierten Zeitgeber (H) beim Empfang von wenigstens zwei aufeinander folgenden elektrischen Impulsen k-1 und k aufgenommen wurden,
- Berechnung (E2) einer Radgeschwindigkeit, **dadurch gekennzeichnet, dass**, wenn die Anzahl der während der vordefinierten Periode ($T_E$) empfangenen elektrischen Impulse kleiner als die Anzahl der Nulldurchgänge des Zeitgebers (H) während der vordefinierten Periode ($T_E$) ist, im Schritt (E2) der Berechnung einer Radgeschwindigkeit die Formel

$$V(n) = \frac{2\pi R}{N\Delta t(n)}$$

verwendet wird, wobei

V(n) die Radgeschwindigkeit ist, die im Schritt der Berechnung berechnet wurde,
R ein vorgespeicherter Wert des Radradius ist,
N die Zähnezahl des Radgeschwindigkeitssensors ist, der bei dem Verfahren verwendet wird,

$$\Delta t(n) = [top_k - top_{k-1} + (2^{Nb} - 1)n] * T_H,$$

wobei $top_k$ der beim Empfang des k-ten elektrischen Impulses gespeicherte Zeitgeberwert ist und $T_H$ der Wert der Periode des Zeitgebers ist,

wobei der Wert von n so bestimmt wird, dass $\frac{2\pi Ri}{NT_H} < V(n) < \frac{2\pi R(i+1)}{NT_H}$ ist, wobei i die Anzahl der elektrischen Impulse ist, die während der vordefinierten Periode ($T_E$) empfangen wurden.

2. Verfahren zur Berechnung einer Radgeschwindigkeit nach Anspruch 1, wobei, wenn der Wert der Anzahl Nb von Bits gleich 16 ist, der Wert der Periode des Zeitgebers $T_H$ gleich 0,25 μs ist, der Wert der vordefinierten Periode ($T_E$) gleich 100 ms ist und der Wert N der Zähnezahl gleich 96 ist, der Wert von n wie folgt definiert ist:

- wenn 7 elektrische Impulse während der vordefinierten Periode ($T_E$) empfangen wurden, n = 1,
- wenn die Anzahl i der elektrischen Impulse, die während der vordefinierten Periode ($T_E$) empfangen wurden, 4, 5 oder 6 beträgt, dann n = 1, falls $\frac{2\pi Ri}{NT_H} < V(1) < \frac{2\pi R(i+1)}{NT_H}$ ist, andernfalls n = 2,

- wenn die Anzahl i der elektrischen Impulse, die während der vordefinierten Periode ($T_E$) empfangen wurden, 2 oder 3 beträgt, dann n = 2, falls $\frac{2\pi Ri}{NT_H} < V(2) < \frac{2\pi R(i+1)}{NT_H}$ ist, andernfalls n = 3.

3. Verfahren zur Berechnung einer Radgeschwindigkeit nach Anspruch 1 oder 2, **dadurch gekennzeichnet, dass** die Radgeschwindigkeit V(n) für jedes Zeitintervall berechnet wird, das zwischen jeweiligen empfangenen elektrischen Impulsen liegt.

4. Verfahren zur Berechnung einer Radgeschwindigkeit nach einem der vorhergehenden Ansprüche, **dadurch gekennzeichnet, dass** es einen zusätzlichen Schritt (E3) der iterativen Berechnung des Zeitpunkts des Empfangs $t_k$ eines k-ten elektrischen Impulses mittels folgender Formel umfasst:

$$t_k = t_{k-1} + \Delta t(n).$$

5. Vorrichtung (DIS) zur Messung einer Radgeschwindigkeit eines Fahrzeugs, welche einen Pufferspeicher umfasst, der in der Lage ist, während einer vordefinierten Periode ($T_E$) Werte zu speichern, die von einem auf einer Anzahl Nb von Bits codierten Zeitgeber (H) beim Empfang von wenigstens zwei aufeinander folgenden elektrischen Impulsen k-1 und k aufgenommen wurden, die von einem Magnetdetektor (DET) beim Durchgang von Zähnen eines Zahnrades eines Magnetsensors gesendet wurden, wobei die Vorrichtung außerdem Mittel zur Berechnung einer Radgeschwindigkeit umfasst, wobei die Vorrichtung **dadurch gekennzeichnet ist, dass**, wenn die Anzahl der während der vordefinierten Periode ($T_E$) empfangenen elektrischen Impulse kleiner als die Anzahl der Nulldurchgänge des Zeitgebers (H) während der vordefinierten Periode ($T_E$) ist, die Mittel zur Berechnung einer Radgeschwindigkeit dafür ausgelegt sind, die Radgeschwindigkeit gemäß der Formel

$$V(n) = \frac{2\pi R}{N\Delta t(n)}$$

zu berechnen, wobei

V(n) die Radgeschwindigkeit ist, die von den Mitteln zur Berechnung berechnet wurde,
R ein vorgespeicherter Wert des Radradius ist,
N die Zähnezahl des Zahnrades ist,

$$\Delta t(n) = [top_k - top_{k-1} + (2^{Nb} - 1)n] * T_H,$$

wobei $top_k$ der beim Empfang des k-ten elektrischen Impulses gespeicherte Zeitgeberwert ist und $T_H$ der Wert der Periode des Zeitgebers ist,

wobei der Wert von n so bestimmt wird, dass $\frac{2\pi Ri}{NT_H} < V(n) < \frac{2\pi R(i+1)}{NT_H}$ ist, wobei i die Anzahl der elektrischen Impulse ist, die während der vordefinierten Periode ($T_E$) empfangen wurden.

**Claims**

1. Vehicle wheel speed calculation method including the steps of:

- recording (E1), during a predefined period ($T_E$), in a buffer (MT), values taken by a clock (H) coded on a number Nb of bits, during the receipt of at least two consecutive electric pulses k-1 and k,
- calculating (E2) a wheel speed,
**characterized in that**, when the number of electric pulses received during said predefined period ($T_E$) is less than the number of times the clock (H) moves to the zero value during said predefined period ($T_E$), said wheel speed calculation step (E2) uses the formula:

$$V(n) = \frac{2\pi R}{N\Delta t(n)}$$

where

V(n) is the wheel speed calculated at said calculation step,
R is a wheel radius pre-recorded value,
N is the number of teeth of the wheel speed sensor used in said method,

$$\Delta t(n) = [top_k - top_{k-1} + (2^{Nb} - 1)n] * T_H,$$

where $top_k$ is the clock value recorded during the receipt of the k-th electric pulse, and $T_H$ is the value of the period of said clock,

the value of n being determined such that $\frac{2\pi Ri}{NT_H} < V(n) < \frac{2\pi R(i+1)}{NT_H}$, i being the number of electric pulses received during said predefined period ($T_E$).

2. Wheel speed calculation method according to Claim 1, wherein since the value of the number Nb of bits is equal to 16, the value of the period of said clock $T_H$ is equal to 0.25 $\mu$s, the value of said predefined period ($T_E$) is equal to 100 ms and the value N of the number of teeth is equal to 96, the value of n is defined as follows:

- when 7 electric pulses are received during said predefined period ($T_E$), n=1
- when the number i of electric pulses received during said predefined period ($T_E$) is 4, 5 or 6, then n=1 if

$\frac{2\pi Ri}{NT_H} < V(1) < \frac{2\pi R(i+1)}{NT_H}$, otherwise n=2,

- when the number i of electric pulses received during said predefined period ($T_E$) is 2 or 3,

then n=2 if $\frac{2\pi Ri}{NT_H} < V(2) < \frac{2\pi R(i+1)}{NT_H}$, otherwise n=3.

3. Wheel speed calculation method according to Claim 1 or 2, **characterized in that** the wheel speed V(n) is calculated for each time interval between each received electric pulse.

4. Wheel speed calculation method according to any one of the preceding claims, **characterized in that** it includes an additional step (E3) for iterative calculation of the instant of receipt $t_k$ of a k-th electric pulse via the formula:

$$t_k = t_{k-1} + \Delta t(n)$$

5. Vehicle wheel speed measurement device (DIS) including a buffer suitable for recording, during a predefined period ($T_E$), values taken by a clock (H) coded on a number Nb of bits, during the receipt of at least two consecutive electric pulses k-1 and k emitted by a magnetic detector (DET) when teeth of a magnetic sensor toothed wheel pass by, said device further including wheel speed calculation means, said device being **characterized in that**, when the number of electric pulses received during said predefined period ($T_E$) is less than the number of times the clock (H) moves to the zero value during said predefined period ($T_E$), said wheel speed calculation means are suitable for calculating said wheel speed according to the formula:

$$V(n) = \frac{2\pi R}{N\Delta t(n)}$$

where

V(n) is the wheel speed calculated by said calculation means,
R is a wheel radius pre-recorded value,
N is the number of teeth of said toothed wheel,

$$\Delta t(n) = [top_k - top_{k-1} + (2^{Nb} - 1)n] * T_H,$$

where $top_k$ is the clock value recorded during the receipt of the k-th electric pulse, and $T_H$ is the value of the period of said clock,

the value of n being determined such that $\frac{2\pi Ri}{NT_H} < V(n) < \frac{2\pi R(i+1)}{NT_H}$, i being the number of electric pulses received during said predefined period ($T_E$).

DIS

AD

H        MT

DET

CPU

Fig.1

| Enregistrement | E1 |

| Calcul de vitesse | E2 |

| Calcul de l'instant de réception | E3 |

Fig.2

| Pulsation électrique n° | Valeur d'horloge |
|---|---|
| 1 | 4 |
| 2 | 65535 |
| 3 | 15 |
| 4 | 49564 |
| ... | ... |
| 13 | 1 |
| 14 | 17849 |
| 15 | 23451 |

Fig.3

Valeur de H

100ms

65535    65535    65535

1er train d'horloge    2ème train d'horloge    7ème train d'horloge

temps

Fig.4